# EUROPEAN PATENT SPECIFICATION

(11) **EP 0 456 294 B1**
(45) Date of publication and mention of the grant of the patent: **31.08.1994**
(21) Application number: 91200869.5
(22) Date of filing: 12.04.1991
(51) Int. Cl.: B60J 10/12

(54) **Sealing device and sealing section used therein**
Dichtungsvorrichtung und darin verwendeter Dichtungsdurchschnitt
Dispositif d'étanchéité et section d'étanchéité utilisé dans celui-ci

(30) Priority: 13.04.1990 NL 9000888
(43) Date of publication of application: 13.11.1991
(73) Proprietor: BOOMSMA PRODUKTIE B.V., NL-1305 AC Almere-Haven (NL)
(72) Inventor: Peters, Wolfram Julius Paul, NL-2314 EM Leiden (NL); van der Hout, Erik Willem, NL-3022 GJ Rotterdam (NL)
(74) Representative: Metman, Karel Johannes

(56) References cited:
- GB-A- 2 110 748

## Description

The invention relates to a sealing device for a rim seal between a first rim having a first surface of known shape, and a second rim having a second surface facing the surface of the first rim and having a shape differing from that of the first surface in longitudinal direction of the rim, a seal being adapted to be positioned between both surfaces of both rims which can be loaded toward each other by clamping means.

Such a sealing device can for instance be used in mounting a vent and/or escape hatch to the roof of a bus, wherein the first rim is formed on the hatch and the second rim is positioned around the opening made in roof of the bus. The shape of this second rim depends on the structure of the roof of the bus. In many cases, the roof is provided with longitudinal stiffening ribs which are formed by bending the sheet-metal used for the roof. The width and height of these ribs can differ from roof to roof, while they can also vary along the width of the roof. To obtain a proper seal between the rims of the hatch and the roof it is now necessary to fix small wooden filler boards between the raised ribs of the roof and to smoothly finish the rim of the roof such that the rim of the roof obtains the same shape as the rim of the hatch. This is a labour-intensive and, hence, costly operation. When the operation is carried out without care it can happen that the rims are not completely equal causing the roof to be deformed due to the tightening of the fastening bolts when the hatch is fixed to the roof.

It is the object of the invention to provide a sealing device of the type mentioned in the preamble, in which said objections are removed in a simple but effective manner.

For this purpose the sealing device according to the invention is characterized in that there is added a flange to the first rim being spaced therefrom but being connected thereto by the clamping means, said second rim being adapted to be positioned between the first rim and the flange, while between the first rim and the flange there is clampable an elastic elongated sealing section acting as said seal and being provided on its side facing the second rim with a plurality of parallel ribs and notches extending longitudinally of the rims, said notches being adapted to be interconnected by cutting the ribs and to accommodate the second rim.

The sealing device according to the invention may be adapted very easily to the shape of the second rim, for instance of the bus roof, by making a cut into the ribs of the sealing section at the positions where the second rim does not extend parallel to the first rim. In this manner the second rim comes to lie within the sealing section, while the spaces between the first and second rims and between the second rim and the flange are filled up by a substantially proper number of ribs at that position. Of course it will occur that the second rim does not always extend exactly at the position of a notch so that the sealing section should be slightly deformed to be able to accommodate the second rim, but the elasticity of the ribs of the sealing section could compensate this difference in order to obtain nonetheless a proper seal. When the first rim and the corresponding flange are loaded toward each other the second rim will be properly sealed on both sides. When there is used a sufficiently elastic material for the sealing section the cuts into the ribs does not have to be made very accurately in order to obtain a correct seal so that the adaptation of the seal to the configuration of the second rim can be carried out relatively quick and simple. Also when there is made a wrong cut this has no adverse effect to the sealing ability, because it is closed when the sealing section is compressed. The sealing device according to the invention further offers the advantage that a single sealing section can be adapted to all kinds of rim configurations.

A possible embodiment of the sealing device is characterized in that the sealing section is made substantially from an elastic material, such as rubber, having an open cell structure.

Such a material for the sealing section can undergo a large degree of elastic deformation by change of volume so that differences between the cuts or notches made into the ribs of the sealing section and the curve of the second rim can be easily compensated and a proper seal can nevertheless be obtained.

In a favourable alternative embodiment the sealing section is made substantially from an elastic material, such as rubber, having a closed cell structure.

This sealing material has the advantage that no change in volume occurs under load thereby causing the corners in the second rim to be easily filled up and sealed due to the deformation of the material.

To promote the deforming capability of the sealing section it is favourable to provide cavities within the sealing section extending in longitudinal direction thereof and preferably consisting of channels each positioned on the level of one of the ribs.

The invention further includes a sealing section for use in the sealing device described hereinbefore, which is characterized by a plurality of notches separated by ribs and extending substantially parallel in longitudinal direction of the section.

Herein it is further possible to provide the sealing section during manufacture with a plurality of further notches or cuts distributed along at least a part of the length of the sealing section and extending transverse to the notches. In this way there is created a kind of "brush", consisting of a plurality of projections or "bristles" between which the second rim may be inserted without the necessity to make cuts during the mounting operation.

It is noted that the sealing device and the sealing section could be used not only for hatches of busses, but they are suited for the sealing between rims of all kinds of parts, and in particular for sealing, within openings, frames or borders for closures such as doors, windows and the like.

The invention will hereafter be elucidated with reference to the drawing showing embodiments of the invention by way of example.

Fig. 1 is a plan view of a portion of a roof of a bus, in which a hatch and an embodiment of the sealing device according to the invention are mounted.

Fig. 2 is an enlarged partial, sectional view along the line II-II of fig. 1.

Fig. 3 is a sectional view along the line III-III of fig. 2.

Fig. 4 and 5 are sectional views corresponding to those of fig. 2 and 3 respectively showing the sealing section in released condition.

Fig. 6 is a sectional view corresponding to that of fig. 5 showing a second embodiment of the sealing section according to the invention on an enlarged scale.

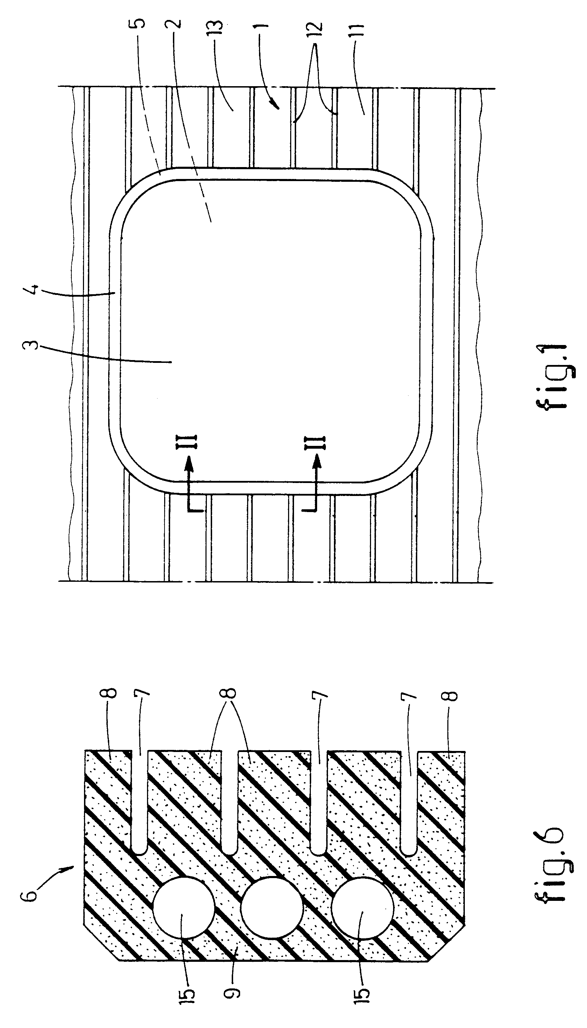

Fig. 1 shows the plan view of the roof 1 of a bus, in which there is made an opening 2 to accommodate a vent and/or escape hatch 3. For this purpose it is necessary to fix a rim 4 at the periphery of the frame of the hatch 3 to a rim 5 around the opening 2 in the roof 1.

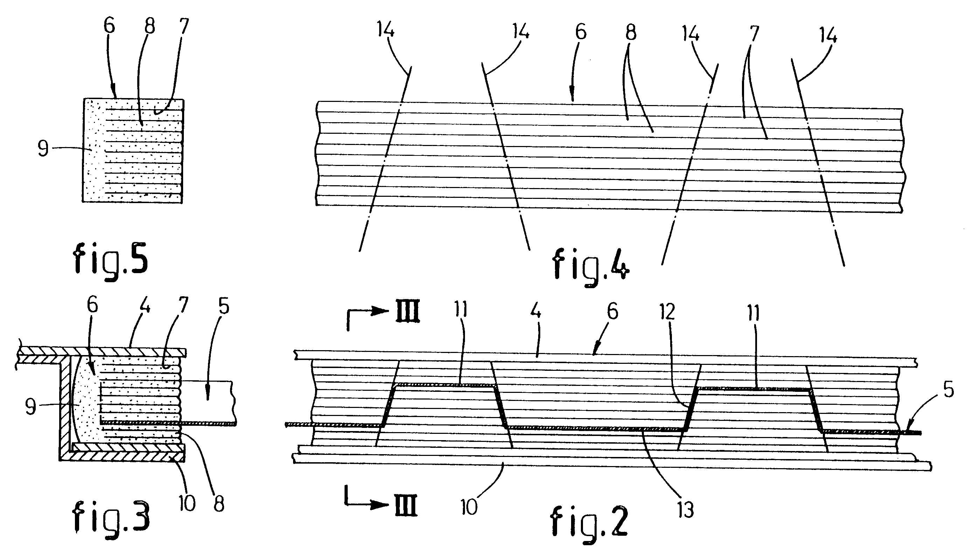

Fig. 1 and 2 illustrate that the bus roof 1 made of metal-sheet is configured such that a number of raised ribs 11 having inclined edges 12 are formed. Between the ribs or raised portions 11 are lower portions 13 extending horizontally. As a consequence, the configuration of the rim 5 differs from that of the substantially straight rim 4 of the hatch 3.

Fig. 2 and 3 show the seal between the rim 4 of the hatch 3 and the rim 5 of the bus roof 1. Herein, there is made use of a sealing section 6 which is shown separately and in relaxed condition in fig. 4 and 5.

As is shown in fig. 2-5, the sealing section 6, which extends along the whole periphery of the rims 4 and 5, has a substantially rectangular cross section. On one side of the sealing section there is provided a plurality of parallel cuts or notches 7 extending longitudinally of the sealing section 6, two adjacent notches 7 defining a rib 8 between them. The notches 7 extend a substantial part of the depth of the sealing section 6. At a back 9 of the sealing section 6 the ribs 8 are interconnected.

As shown in fig. 2 and 3, the sealing section 6 is intended to be positioned between the edge 4 of the hatch 3 and a flange 10 extending parallel to the rim 4 and being connected with either the rim 4 or another part of the hatch 3 by means of clamping means (not shown), which may consist of a screw connection, for example.

To mount the sealing device with the sealing section 6 the now described method can be followed. First of all, the sealing section may be pressed with its side where the notches 7 start against the rim 5 of the bus roof 1 which, for example, may be covered with chalk so that the configuration of the rim 5 can be seen on the sealing section 6. Then at the position of the inclined edges 12 there is made a cut 14 extending under the same inclination either along the full height of the section 6 or only through the respective ribs 8. The cuts 14 are intended to interconnect the respective notches 7 in which the portions 11 and 13 of the rim 5 eventually come to lie. When the notches 14 are provided the sealing section 6 can be slid over the rim 5 so that the rim 5 comes to lie within the various notches 7 and cuts 14 respectively and abuts with its edge to the back 9 of the sealing section 6. Then, the rim 4 and the flange 10 of the hatch 3 are positioned above or below the sealing section 6, respectively, whereafter the rim 4 and the flange 10 are moved toward each other by clamping means not shown thereby compressing the sealing section 6 between the rim 4 and the flange 5 and clamping the rim 5 within the sealing section 6. As there is substantially an appropriate amount of sealing material both below and above the rim 5 there will be obtained a proper seal along the whole length of the rim 5.

Fig. 6 shows an alternative embodiment of the sealing section 6 which is made of neoprene having a closed cell structure instead of neoprene having an open cell structure of which the sealing section according to fig. 2-5 is made. The notches 7 have such a width that the rim 5 can easily be accommodated within the notches 7. At the level of each of the ribs 8 of the sealing section 6 there is formed a cavity or channel 15 extending longitudinally of the sealing section and serving to promote the deforming capability of the sealing section in vertical direction. At the level of the notches 7 the back 9 is kept solid so that when a sealing section 6 is deformed the material of the back 9 will be pressed against rim 5 arranged in the respective notch 7 in case the back 9 is disposed against a flange of the sealing section. This promotes the sealing ability of the sealing section 6.

As will be clear from the foregoing, the invention provides a sealing section and a sealing device which can be adapted very easily to a rim to be sealed, regardless of the shape of this rim.

The invention is not restricted to the embodiments shown in the drawing and described hereinbefore by way of example, which can be varied in different manners within the scope of the invention as defined in the claims. For instance, it is possible to vary the number and the thickness of the ribs within wide limits depending on the expected curve of the rims, the compensating capability of the sealing material etc, for example. Furthermore it is possible, especially in a larger series of seals for the same use, to provide the cut(s) into the ribs already during manufacture.

## Claims

1. Sealing device for a rim seal between a first rim (4) having a first surface of known shape, and a second rim (5) having a second surface facing the surface of the first rim and having a shape differing from that of the first surface in longitudinal direction of the rim, a seal being adapted to be positioned between both surfaces of both rims (4, 5) which can be loaded toward each other by clamping means, **characterized** in that there is added a flange (10) to the first rim (4) being spaced therefrom but being connected thereto by the clamping means, said second rim (5) being adapted to be positioned between the first rim (4) and the flange (10), while between the first rim (4) and the flange (5) there is clampable an elastic elongated sealing section (6) acting as said seal and being provided on its side facing the second rim (5) with a plurality of parallel ribs (8) and notches (7) extending longitudinally of the rims, said notches being adapted to be interconnected by cutting the ribs and to accommodate the second rim (5).

2. Sealing device according to claim 1, wherein the sealing section (6) is made substantially from an elastic material, such as rubber, having an open cell structure.

3. Sealing device according to claim 1, wherein the sealing section (6) is made substantially from an elastic material, such as rubber, having a closed cell structure.

4. Sealing device according to claim 3, wherein within the sealing section (6) there are arranged cavities (15) extending in longitudinal direction thereof.

5. Sealing device according to claim 4, wherein the cavities (15) consist of channels each arranged at the level of one of said ribs (8).

6. Sealing device according to claim 5, wherein the width of said notches (7) is slightly larger than the thickness of the second rim (5).

7. Sealing device according to one of the preceding claims, comprising a plurality of further notches or cuts distributed along at least a part of the length of the sealing section (6) and extending transverse to the notches (7).

8. Sealing section for use in the sealing device according to one of the preceding claims.

9. Elastic elongated sealing section (6) according to claim 8, **characterized** by a plurality of notches (7) separated by ribs (8), and extending substantially parallel in longitudinal direction of the section (6).

10. Sealing section according to claim 9, comprising a plurality of further notches or cuts distributed along at least a part of the length of the sealing section (6) and extending transverse to the notches (7).

## Patentansprüche

1. Abdichtungsvorrichtung für eine Abdichtung zwischen einer ersten Kante (4) und einer zweiten Kante (5), wobei die erste Kante (4) eine erste Oberfläche mit bekannter Form aufweist, wobei die zweite Kante (5) eine der Oberfläche der ersten Kante (4) gegenüberstehende und in longitudinaler Richtung der Kanten (4, 5) von der Form der Oberfläche der ersten Kante (4) abweichende Oberfläche aufweist, wobei eine Abdichtung für eine Anordnung zwischen den Oberflächen beider Kanten (4, 5) angepaßt ist und wobei die beiden Kanten (4, 5) mit Hilfe einer Klemmvorrichtung gegeneinander andrückbar sind, **dadurch gekennzeichnet**, daß ein Flansch (10) an der ersten Kante (4) mit einem Abstand von der Kante (4) mit Hilfe der Klemmvorrichtung befestigt ist, daß die zweite Kante (5) für eine Anordnung zwischen der ersten Kante (4) und dem Flansch (10) angepaßt ist, daß ein elastischer, verlängerter, abdichtender Abschnitt (6) zwischen der ersten Kante (4) und dem Flansch (10) festklemmbar ist und als Abdichtung dient,daß der abdichtende Abschnitt (6) an der der zweiten Kante (5) zugewandten Seite mit einer Mehrzahl von parallelen, in Richtung der Kanten (4, 5) verlaufenden Rippen (8) und Einschnitten (7) versehen ist und daß die Einschnitte (7) derart ausgestaltet sind, daß die Einschnitte (7) durch Schneiden der Rippen (8) miteinander verbindbar sind und daß die Einschnitte (7) an die zweite Kante (5) anpaßbar sind.

2. Abdichtungsvorrichtung nach Anspruch 1, dadurch gekennzeichnet, daß der abdichtende Abschnitt (6) im wesentlichen aus einem elastischen, offenzelligen Material, vorzugsweise aus Gummi, hergestellt ist.

3. Abdichtungsvorrichtung nach Anspruch 1, dadurch gekennzeichnet, daß der abdichtende Abschnitt (6) im wesentlichen aus einem elastischen, geschlossenzelligen Material, vorzugsweise aus Gummi, hergestellt ist.

4. Abdichtungsvorrichtung nach Anspruch 3, dadurch gekennzeichnet, daß in dem abdichtenden Abschnitt (6) in longitudinaler Richtung Hohlräume (15) angeordnet sind.

5. Abdichtungsvorrichtung nach Anspruch 4, dadurch gekennzeichnet, daß die Hohlräume (15) Kanäle aufweisen und daß die Kanäle jeweils entlang einer der Rippen (8) angeordnet sind.

6. Abdichtungsvorrichtung nach Anspruch 5, dadurch gekennzeichnet, daß die Breite der Einschnitte (7) ein wenig größer als die Dicke der zweiten Kante (5) ist.

7. Abdichtungsvorrichtung nach einem der vorangegangenen Ansprüche, dadurch gekennzeichnet, daß eine Mehrzahl weiterer Einschnitte vorgesehen ist und daß diese Einschnitte entlang zumindest eines Teils der Länge des abdichtenden Abschnittes (6) verteilt sind und quer zu den Einschnitten (7) verlaufen.

8. Abdichtender Abschnitt für die Verwendung in einer Abdichtungsvorrichtung nach einem der vorangegangenen Ansprüche.

9. Abdichtender Abschnitt nach Anspruch 8, **gekennzeichnet durch** eine Mehrzahl von durch Rippen (8) getrennten Einschnitten (7), die im wesentlichen parallel in longitudinaler Richtung des Abschnittes (6) verlaufen.

10. Abdichtender Abschnitt nach Anspruch 9, dadurch gekennzeichnet, daß eine Mehrzahl weiterer Einschnitte vorgesehen ist und daß diese Einschnitte entlang zumindest eines Teils der Länge des abdichtenden Abschnittes (6) verteilt sind und quer zu den Einschnitten (7) verlaufen.

## Revendications

1. Dispositif d'étanchéité pour un joint de rebords entre un premier rebord (4) comportant une première surface d'un profit connu, et un second rebord (5) comportant une seconde surface en regard de la surface du premier rebord et comportant un profil différent de celui de la première surface dans une direction longitudinale du rebord, un joint étant adapté pour être placé entre les deux surfaces des deux rebords (4,5) qui peut être contraint vers chacune des surfaces par des moyens de serrage, caractérisé en ce qu'une aile (10) est ajoutée au premier rebord (4) en étant espacée de celui-ci tout en étant raccordée à celui-ci par les moyens de serrage, le second rebord (5) étant adapté pour être placé entre le premier rebord (4) et l'aile (10), tandis qu'entre le premier rebord (4) et l'aile (5) il y a une partie d'étanchéité (6) allongée élastique, pouvant être serrée, agissant en tant que joint et étant munie sur son côté en regard du second rebord (5) d'une pluralité de nervures (8) parallèles et d'encoches (7) s'étendant longitudinalement par rapport au rebord, les encoches étant adaptées pour être reliées par coupure des nervures et pour recevoir le second rebord (5).

2. Dispositif d'étanchéité selon la revendication 1, dans lequel la partie d'étanchéité (6) est fabriquée de façon substantielle avec un matériau élastique, tel que du caoutchouc, comportant une structure à alvéoles ouverts.

3. Dispositif d'étanchéité selon la revendication 1, dans lequel la partie d'étanchéité (6) est fabriquée de façon substantielle avec un matériau élastique, tel que du caoutchouc, comportant une structure à alvéoles fermés.

4. Dispositif d'étanchéité selon la revendication 3, dans lequel des cavités (15) sont agencées dans la partie d'étanchéité (6) en s'étendant dans une direction longitudinale de cette partie.

5. Dispositif d'étanchéité selon la revendication 4, dans lequel les cavités (15) sont formées par des canaux agencés chacun au niveau de l'une des nervures (8).

6. Dispositif d'étanchéité selon la revendication 5, dans lequel la largeur des encoches (7) est sensiblement supérieure à l'épaisseur du second rebord (5).

7. Dispositif d'étanchéité selon l'une quelconque des revendications précédentes, comprenant une pluralité d'encoches supplémentaires ou de découpes agencées le long d'au moins une partie de la longueur de la partie d'étanchéité (6) et s'étendant transversalement par rapport aux encoches (7).

8. Partie d'étanchéité destinée à être utilisée dans une dispositif d'étanchéité selon l'une quelconque des revendications précédentes.

9. Partie d'étanchéité (6) allongée élastique selon la revendication 8, caractérisée par une pluralité d'encoches (7) séparées par des nervures (8), et s'étendant sensiblement parallèlement dans une direction longitudinale de la partie (6).

10. Partie d'étanchéité selon la revendication 9, comprenant une pluralité d'encoches supplémentaires ou de découpes réparties le long d'au moins une partie de la longueur de la partie d'étanchéité (6) et s'étendant transversalement par rapport aux encoches (7).
